# EUROPÄISCHE PATENTSCHRIFT

(11) **EP 0 897 961 B1**
(45) Veröffentlichungstag und Bekanntmachung des Hinweises auf die Patenterteilung: **13.08.2003**
(21) Anmeldenummer: 98114274.8
(22) Anmeldetag: 30.07.1998
(51) Int. Cl.: C09D 11/16

(54) **Wässrige Tinte mit verlängerter "Cap-Off-Time" und Verfahren zu deren Herstellung**
Aqueous ink with prolonged cap-off time and method of making it
Encre aqueuse présentant un temps "cap-off" prolongé et son procédé de préparation

(30) Priorität: 15.08.1997 DE 19735604
(43) Veröffentlichungstag der Anmeldung: 24.02.1999
(73) Patentinhaber: J.S. STAEDTLER GMBH & CO, D-90427 Nürnberg (DE)
(72) Erfinder: Fraas, Rosemarie, 90541 Schwaig (DE)

(56) Entgegenhaltungen:
- EP-A- 0 322 805
- EP-A- 0 751 193
- DE-A- 3 337 866
- DE-A- 4 211 262
- US-A- 4 686 246

## Beschreibung

Die Erfindung betrifft eine wässrige Tinte mit verlängerter "Cap-Off-Time" und ein Verfahren zu deren Herstellung, wobei es sich insbesondere um eine Tinte zum Schreiben, Zeichnen, und/oder Malen, auf Normalpapier oder sonstigen saugfähigen Schriftträgern handelt und wobei diese Tinte vor allem für die Verwendung in Füllfederhaltern, Kugel- oder Röhrchenschreibern, in sogenannten Filz- oder Faserschreibern, und/oder in sonstigen Kapillarkanal-Schreibgeräten vorgesehen ist.

Unter "Cap-Off-Time" ist die Zeit zu verstehen, die ein Schreibgerät offen, d.h. unverschlossen, liegen bleiben, aufbewahrt werden oder unbenutzt bleiben kann, ohne hierbei einzutrocknen.

Wässrige Tinten sind prinzipiell bekannt und weisen in der Regel Wasser als Lösungsmittel und Pigmente oder wasserlösliche Farbstoffe als Farbmittel auf.
Sie enthalten zudem meist auch Additive, wie Tenside, Emulgatoren, Konservierungsmittel, Feuchthaltemittel und/oder Glycole.
Hauptnachteil dieser Tinten ist ihre in der Regel sehr geringe "Cap-Off-Time". Die meisten wässrigen Farbstofftinten trocknen z.B. bei der Verwendung in Faserschreibern, bereits schon nach sehr kurzer Zeit, d.h. meist innerhalb weniger Stunden ein, wenn sie nicht mit einem Schoner luftdicht verschlossen werden.
Außerdem kristallisiert der Farbstoff an der Spitze oder Düse oft aus und verklebt diese. Selbst wenn derartige Stifte oder Düsen nachträglich wieder verschlossen werden, regeneriert sich der Stift oder der Druckkopf meistens nicht mehr.
Schon nach relativ kurzer Zeit ohne Verschluß zeigen die meisten herkömmlichen Geräte mit derartigen Tinten schlechtes Anschreibverhalten oder funktionieren überhaupt nicht mehr bzw. müssen ggf. durch langwierige Anschreibversuche reaktiviert werden, sofern sie nicht bereits vollkommen unbrauchbar sind.

Zur Erhöhung der "Cap-Off-Time", bzw. zur Verbesserung des Eintrocknungsverhaltens derartiger Tinten, wurden bereits verschiedene Lösungen vorgeschlagen.

So wird in **[1]**, **DE-PS 530 800**, eine "schnelltrocknende, in der Feder und im Schreibgerät nicht eintrocknende, Schreibflüssigkeit" beschrieben, die neben flüchtigen Bestandteilen, wie Alkohol usw., Zusätze von organischen Säureestern des Glycerins oder des Glycols enthalten sollen, um einerseits ein schnelles Trocknen der Schrift auf dem Papier zu bewirken und zum anderen aber ein rasches Eintrocknen im Schreibgerät zu verhindern.

Nach **[2],** der **DE-AS 19 13 174,** soll eine "Tintenzubereitung auf wässriger Basis" auch ein "organisches Vehikel" bzw. ein spezielles Alkylamid enthalten, um ein Austrocknen in einer porösen Federspitze zu verhindern bzw. zu verzögern.

In **[3]**, **DE-PS 39 41 662**, wird eine Schreibflüssigkeit als Tinte oder Tusche auf Wasserbasis offenbart, der spezielle Polyglykolether zugesetzt werden sollen, um so ebenfalls das Eintrocknen im Schreibgerät herabzusetzen bzw. zu verzögern.

Nach **[4]**, der **EP-PS 359 805,** wird die "Verwendung von Feststoffen als Antiblockadditive für Markierflüssigkeiten" vorgeschlagen, um dadurch einen "verdunstungshemmenden Verschluß" das Eintrocknen der Tinte oder Tusche in ungeschützten und nicht benützten kapillaren Austrittsöffnungen von Schreibgeräten oder Düsen wirksam zu verhindern. Als derartige lösliche Feststoffe sollen u.a. anorganische Salze, organische Säuren oder sonstige organische Verbindungen, Aminosäure, Harnstoff, Schwefelverbindungen usw. in Betracht kommen.

In **[5]**, der **JP-P/AS 6-47 660** wird außerdem eine Tinte mit einer erhöhten "Cap-Off-Time" beschrieben, die über einen längeren Zeitraum ohne Schoner gelagert werden kann.
Diese Tinte setzt sich aus einem Farbstoff, einem organischen Lösungsmittel, Harz, Dekaglycerin und a-Olefin (alpha-Olefin) zusammen. Olefin ist die Gruppenbezeichnung für acyclische und cyclische aliphatische Kohlenwasserstoffe mit einer oder mehreren reaktiven Doppelbindungen im Molekül.
Bei enthaltenen a-Olefinen liegt die Doppelbindung zwischen dem ersten und zweiten Kohlenstoffatom und ist aufgrund ihres ungesättigten Charakters sehr reaktionsfähig.
Nachteilig bei dieser Tinte ist das Vorhandensein von a-Olefinen, das dazu führen kann, daß die Tinte nicht lagerstabil ist, aufgrund von Reaktionen des a-Olefins mit anderen Tintenbestandteilen.

Nachteilig bei allen anderen vorgeschlagenen Lösungen ist es zudem, daß - ebenso wie andere marktübliche Rezepturen mit basischen Farbstoffen und Ethylenglycol, die an sich in der Regel auch eine gute "Cap-Off-Time" aufweisen - hierbei die toxikologischen und physiologischen Eigenschaften der Rohstoffe bei deren Verwendung nicht unbedenklich sind und zu Problemen bei der Anwendung führen können, insbesondere bei der Benutzung durch Kinder.

**Aufgabe** der vorliegenden Erfindung ist es daher eine Tinte und ein Herstellungsverfahren hierfür zu schaffen, wobei die Tinte in breitem Umfang einsetzbar, toxikologisch und physiologisch unbedenklich ist und dennoch eine relativ hohe "Cap-Off-Time" aufweist und wobei die Farbstoffe auch bei längerer offener Lagerung nicht auskristallisieren. Zudem sollen gewohnte Tinteneigenschaften, wie Auswaschbarkeit aus Textilien und gute Schreibeigenschaften, erhalten bleiben und die Lagerfähigkeit der Schreibgeräte verbessert werden.

Diese Aufgabe wird mit den kennzeichnenden Merkmalen des Anspruchs 1 gelöst.
Bevorzugte Ausführungsformen, vorteilhafte Weiterbildungen und ein bevorzugtes Verfahren zur Herstellung derartiger Tinten sind in den weiteren Ansprüchen umfaßt.

Zur weiteren Beschreibung sollen vorab die Besonderheiten und die Wirkungsweisen der einzelnen Rohstoffe bzw. Komponenten in den vorschlagsgemäßen Tinten erläutert werden:
Zur besseren Übersicht sollen hierbei die nachfolgenden Abkürzungen: K1, K... = Komponenten, L1, L... = Lösungen, E1, E... = Emulsionen, M = Mittel, M1, M... = Mischungen, die Zusammenhänge verdeutlichen.

### a) Lösungsmittel (LM): (K1)

Für die vorgeschlagenene Tinte wird als Lösungsmittel (LM) ausschließlich Wasser, vorzugsweise entionisiertes bzw. demineralisiertes Wasser in einer Menge von ca. 30 bis 90 Gew.-% verwendet.

### b) Bindemittel/Filmbildner (BM):

### 1.) Gummi arabicum (Ga): (K2)

Gummi arabicum ist ein getrocknetes Exsudat von Acacia Senegal und anderen Acaciaarten, eine Mischung aus Calcium-, Magnesium- und Kaliumsalzen der Polyarabinsäure.
Diese polymere Säure ist ein langkettiges, verzweigtes Molekül mit einem mittleren Molekulargewicht von ca. 24000. Gummi arabicum gehört zu den Hydrokolloiden und ist dadurch befähigt, mit den emulgierenden Teilchen in Wechselwirkung zu treten, indem sie sich komplexartig an die zu schützenden Teilchen anlagern. Sie verstärken hierbei deren Ladung oder deren Solvathülle oder beides.
Hydrokolloide bilden mit Wasser Hydrogele aus, die zu schützenden Filmen antrocknen.
Bevorzugt wird eine vorgefertigte 10%-ige Gummi arabicum-Lösung verwendet.

Hydrokolloide sind Polysaccaride, ihre Makromoleküle unterscheiden sich in:
a) lineare Polysaccaride: Sie bilden eine einfache Kette (z.B. Alginate)
b) substituierte, lineare Polysaccaride wie z.B. Galaktomanone, Xanthan
c) verzweigten Polysaccaride wie Gummi arabicum:
   Gummi arabicum zeichnet sich durch eine sehr gute Wasserlöslichkeit aus. Es können selbst 40-%ige Lösungen hergestellt werden, die noch newtonisches Fließverhalten zeigen. In höheren Konzentrationen werden die Lösungen pseudoplastisch. Setzt man der Lösung Salze zu, wird die Viskosität stark herabgesetzt.

### 2.) Bienenwachs (Bw): (K3)

Natürliches Bienenwachs ist einer der ältesten Rohstoffe in Kosmetikprodukten und wird vor allem zur Konsistenzregulierung und wegen der emulgierenden Eigenschaften eingesetzt. Außerdem nutzt man die thermoplastische Natur des Bienenwachses.
Für die Cap-Off-Tinte wird bevorzugt eine handelsübliche wässrige **Bienenwachsemulsion (BwE)** (K3 + K1 ggf. + K6) eingesetzt, die als Dispersion mit einem Feststoffgehalt von 18 Gew.-% Bienenwachs und mit ethoxiliertem Fettalkoholether als Emulgator handelsüblich erhältlich ist.
Bienenwachs ist ein Gemisch von 70-75% verschiedener Ester von C26-C32 Alkoholen mit hauptsächlich Palmitin, -Hydroxipalmitin, -aß Dihydroxipalmitin- und -Cerotinsäure, ca.14% freie Wachssäure, ca. 12% Kohlenwasserstoff, ca. 1% Fettsäurestearinsäureester und freie Wachsalkohole mit einer Einsatzmenge von max. 1%.

### c) Farbmittel (FM): (K4)

Es sollen wasserlösliche Farbstoffe auf der Basis von Lebensmittelfarbstoffen und/oder Säurefarbstoffen verwendet werden. Für die vorgeschlagenen Tinten kommen vorzugsweise Säurefarbstoffe oder Lebensmittelfarbstoffe zum Einsatz, wobei Tinten mit Säurefarbstoffen eine erheblich höhere "Cap-Off-Time" aufweisen, als Tinten mit Lebensmittelfarbstoffen. Der Farbstoff-Einsatz beträgt je nach Farbe zwischen 0,5 und 10 Gew.-%. Vorteilhaft sind Farbstoffe mit guter Löslichkeit in Wasser. Für das Eintrocknungsverhalten spielt auch die Konzentration der Farbstoffe in der Tinte eine große Rolle. So besitzt z.B. eine gelbe Tinte eine höhere "Cap-Off-Time" als eine schwarze Tinte, da in der Regel in gelber Tinte weniger Farbstoff erforderlich ist, als in schwarzer Tinte.

Zur Verbesserung der "Cap-Off-Time" von Schreibgeräten mit wässriger Tinte spielt auch der Einsatz der Farbstoffklassen eine große Rolle.
Je nach Farbstoffklasse kann eine "Cap-Off-Time" von 14 Tagen bis 4 Wochen und länger erreicht werden. Selbst eingetrocknete Spitzen regenerieren sich nach ca. 10 Stunden wieder, wenn der Halter verschlossen wird.
Als besonders geeignet haben sich die nachfolgend aufgeführten Farbstoffe erwiesen:

### 1.) Lebensmittelfarbstoffe aus der Gruppe:

E 110, CI 15985, Food Yellow 3; E 104, CI 47005, Food Yellow 13; E 102, CI 19140, Food Yellow 4; E 124, CI 16255, Food Red 7; E 127, CI 45430, Food Red 14; E 133, CI 42090, Food Blue 2; E 131, CI 42051, Food Blue 3 und/oder

### 2.) Säurefarbstoffe aus der Gruppe:

Acid Yellow 23, CI 1910; Acid Red 18, CI 16255; Acid Red 51, CI 45430; Acid Orange 4, CI 16230; Acid Blue 93; Acid Blue 9, CI 42090; Acid Blue 104, CI 42735; Acid Violett 49, CI 42640;

### d) Feuchthaltemittel (FhM): (K5)

Als Feuchthaltemittel ist vorzugsweise Diethylenglykol in einer Menge von 25-35 Gew.-% zu verwenden.
Der Zusatz von Glykolen zur Wasserphase fördert die Stabilität von O/W- Emulsionen, um die es sich bei den vorschlagsgemäßen Tinten grundsätzlich handelt. Zusätzlich verhindern diese Zusätze wegen ihrer hygroskopischen Eigenschaften das Austrocknen der Emulsion.

Es eignen sich auch andere Feuchthaltemittel, wie z.B. Glycerin, Propylenglycol und/oder Polyglycole.
Die "Cap-Off-Time" erhöht sich auch hierdurch, wobei jedoch die besten Ergebnisse mit Diethylenglycol erreicht werden.

Um eine Emulsion über eine längere Zeit zu stabilisieren, müssen Hilfsmittel angewandt werden, die die Entmischung der beiden Phasen unterbinden. Dies kann durch

### e) Stabilisatoren oder Emulgatoren erreicht werden.

e1) **Stabilisatoren** wirken durch Viskositätserhöhung und durch Ausbildung mechanisch-stabiler Grenzflächenfilme, die mechanisch hergestellte Emulsionen stabilisieren.
e2) **Emulgatoren** werden nach einem bestimmten System eingeteilt.
   Es handelt sich hierbei um das von der Fa. Atlas Chemie entwickelte "HLB-System" (Hydrophile-lipophile-Balance).
   Im HLB-System schreibt man jedem Emulgator einen Zahlenwert zu, der HLB-Wert genannt wird.
   Der HLB-Wert gibt das hydrophile-lipophile Gleichgewicht an. Alle Emulgatoren enthalten sowohl hydrophile als auch lipophile Gruppen.
   Ein lipophiler Emulgator besitzt einen niedrigen HLB-Wert von unter 9,0 und ein hydrophiler Emulgator einen hohen HLB-Wert von über 11,0.
   Emulgatoren mit niedrigen HLB-Werten neigen dazu, öllöslich zu sein, während Emulgatoren mit hohem HLB-Werten wasserlöslich sind.
   Man verwendet z.B. einen wasserlöslichen Emulgator, wenn das Endprodukt mit Wasser verdünnt werden kann.
   O/W-Emulgatoren weisen HLB-Werte zwischen 8 und 18 auf. Hydrophile Emulgatoren mit hohem HLB-Wert begünstigen die Bildung einer O/W-Emulsion.
   In der vorgeschlagenen Tinte werden als nichtionogene Lösungsvermittler bevorzugt handelsübliche Emulgatoren eingesetzt, die beispielsweise als zähflüssige Lösungen erhältlich sind und die durch Umsetzung von Ethylenoxid mit hydriertem Rizinusöl hergestellt wurden und sich z.B. aus 90 Gew.-% hydriertem Rizinusöl, 5 Gew.-% 1,2-Propylenglykol und 5 Gew.-% Wasser zusammensetzen können. Hauptbestandteile derartiger Emulgatoren sind ggf. auch Fettsäureglycerinpolyethylenglycolester und Fettsäurepolyethylenglycolester.
   Sie stellen den hydrophoben Teil der Produkte dar.
   Der hydrophile Teil besteht aus Polyethlenglycol und Glycerinethoxylat.
e3) **Emulgatoren (EM):** (K6)
   Als mögliche Emulgatoren können bevorzugt nichtionische Emulgatoren aus den nachfolgend aufgeführten Gruppen in Betracht kommen: Alkoholfettsäureester, Ethylenfettsäureester, Polyethylenglycolfettsäureester, Glycerin- bzw. Polyfettsäureester, Sorbitfettsäureester, Pentaerythritfettsäureester, Fettsäureester von Glycerinester, Saccarosefettsäureester, Alkoholpolyglycolether, Fettsäurepolyglycolether, Fettsäureesterpolyglycolether, Fettaminpolyglycolether, Polyglycolether von Fettsäurealkanolamiden, Polyglycolether von Fetten und Ölen, Polypropylenglycolpolyglycolether, Lanolinpolyglycolether, Alkoholpolypropylenglycolether, Fettsäurepolypropylenglycolether, Polypropylenglycolether von Fettaminen, Lanolinpolypropylenglycolether.
   Besonders vorteilhaft hat sich auch die Verwendung einer handelsüblichen Lösung aus 85 bis 95 Gew.-% hydriertem Rizinusöl mit 2 bis 8 Gew.-% 1,2 Propylenglykol und ca. 5 Gew.-% Wasser erwiesen.

### f) Konservierungsmittel (KM): (K7)

Als Konservierungsmittel wird vorteilhafterweise ein Gemisch aus 10 bis 60 Gew.-% tert. Butylhydroperoxid und 2 bis 50 Gew.-% Monophenylglykolether sowie ggf. bis zu 85 Gew.-% Wasser, Propylenglykol, Triethylenglykol oder einem sonstigen geeigneten Lösungs- oder Verdünnungsmittel verwendet, wie es handelsüblich erhältlich ist.
Diese Konservierungsmittel eignen sich besonders für wässrige Lösungen und Emulsionen.

### g) Puffermittel/Triethanolamin (PM) (K8)

Zur Einstellung des pH-Wertes auf 8 werden vorzugsweise ca. 0,1 bis 0,6 Gew.-% Triethanolamin als Puffermittel verwendet. Die erfindungsgemäße Tinte wird bevorzugt leicht alkalisch eingestellt, um eventuelle Probleme bei verschiedenen Schreibspitzen und/oder Farbstoffen der verwendeten Art zu vermeiden.

### h) Tenside (T):

Eine Besonderheit der Erfindung ist darin zu sehen, daß bei den vorgeschlagenen Tinten keine Tenside oder sonstige Netzmittel verwendet werden sollen. Es überrascht, daß der - sonst übliche - Einsatz von Tensiden bzw. Netzmitteln, hier nicht gewünscht bzw. erforderlich ist, sondern daß im Gegenteil, das ganze System der vorgeschlagenen Tinte ohne Tenside oder sonstige Netzmittel optimal erhalten bleibt und die "Cap-Off-Time" erheblich verbessert wird.

Die Erfindung wird nachfolgend anhand einiger Ausführungsbeispiele näher erläutert.

### i) Zusammensetzung:

Die vorgeschlagene wäßrige Tinte besteht im wesentlichen aus folgenden Komponenten (K1, K2, K3, K..., K8) und/oder Mischungen (M1, M2, M...):
1.) (K1) Lösungsmittel (LM): ca. 30-90 Gew.-% demineralisiertes **Wasser (LM)**/(K1);
2.) Bindemittel (BM) bzw. Filmbildner (FB):
   a) (K2) Polysacccaride/Hydrokolloide,
      = verzweigte Polysaccaride = **Gummi arabicum (Ga)** z.B. als
      (M1/L1) 10%-ige **Ga-Lösung (GaL)** mit Konservierungsmittel (KM)/(K7) in Wasser (LM)/(K1),
   b) (K3) **Bienenwachs (Bw),** z.B. als:
      (M2/E1) wässrige **Bienenwachsemulsion (BwE)** mit 18% Feststoffgehalt und ethoxiliertem Fettalkoholether (EM) / (K6) in Wasser (K1);
3.) (K4) Farbmittel (FM): 0,1 bis 10,0 Gew.-% wasserlösliche **Farbstoffe (FS),** insbesondere Lebensmittel- und/oder Säure-Farbstoffe;
4.) (K5) **Feuchthaltemittel (FhM):** 10 bis 40, vorzugsweise 25-35 Gew.-% Diethylenglykol
   und/oder Glycerin, Propylenglycol oder Polyglycole;
5.) (K6) **Emulgator (EM):** z.B.
   (K6/M3) handelsübliche Mischungen aus hydriertem Rizinusöl mit 1,2-Propylenglykol und Wasser oder alternativ Polyethylenglycol und Propylenglykol (HLB-Wert 14-16);
6.) (K7) **Konservierungsmittel (KM):** z.B.
   (K7/M4) ein handelsübliches Gemisch aus 10 bis 60 Gew.-% tert. Butylhydroperoxid und 2 bis 50 Gew.-% Monophenylglykolether sowie ggf. einem Verdünnungsmittel;
7.) (K8) **Puffermittel (PM)**:z.B. 0,1 bis 3, bevorzugt 0,3 bis 0,5 Gew.-% Triethanolamin als Regulierungsmittel zur pH-Wert Einstellung (pH-Wert ca. 8,0);

Bei einem bevorzugten Verfahren zur Herstellung vorschlagsgemäßer Tinten wird zunächst eine Basis-Mischung aus Bienenwachsemulsion, Emulgator, Hydrokolloid und Konservierungsmittel hergestellt.

### j) Verfahren:

Die erfindungsgemäße "Cap-Off-Tinte" wird als eine O/W-Emulsion hergestellt.
Für die Wirkungsweise der Tinte ist es auch von Vorteil, wenn ein genauer Verfahrensablauf eingehalten wird.

Aus den Komponenten (K1, K2, K...) werden z.B. die nachfolgenden Mischungen (M1, M2, M...) schrittweise gebildet:
1.) entionisiertes **Wasser** (LM/K1) wird vorgelegt,
2.) eine **Bienenwachsemulsion** (**BwE**/M1) aus Wasser(K1), Binenwachs (K3) und ggf. Emulgator (K6) kann z.B. als Handelsprodukt erworben werden,
3.) eine Gummi arabicum Lösung (GaL/M2) wird aus Gummi arabicum (Ga) mit Wasser (K1) und Konservierungsmittel (K7), z.B. ca. 10%-ige, hergestellt und zu
4.) einer Basismischung (M3) aus (M1) und (M2) und unter Zugabe von Emulgatoren (EM/K6) und Feuchthaltemittel (FhM/K5) vermischt.
   Diese Basismischung (M3) wird
5.) in das Lösungsmittel (LM/K1) eingerührt, dann wird
6.) das Farbmittel (FM/K4) sowie
7.) das Konservierungsmittel (KM/K7) und
8.) das Puffermittel (PM/K8) ebenfalls unter ständigem Rühren zugemischt, wobei der pH-Wert auf 8 eingestellt wird und somit die Tinte fertig ist.

Durch die Gummi arabicum und/oder Bienenwachs-Partikel, die fein dispergiert in der Tinte vorliegen, bildet sich auf den Spitzen der Faserschreiber ein elastischer Film, der das Verdunsten des Wassers und das Eintrocknen des Stiftes über längere Zeit verhindert.

### k) Verfahrensbeispiele:

Die Verfahrensbeispiele V1.1 bis V7.0 stellen hierbei eine Art der Fertigung dar und die Beispiele V1.1 bis V4.2 mit

V8.1 bis V10.2 eine weitere Herstellungsmöglichkeit.

### Beispiel V1.1) (BwE/M1) (ggf. Handelsprodukte):

| | |
|---|---|
| demineralisiertes Wasser (LM/K1) | 80 bis 85 Gew.-% |
| Bienenwachs (Bw/K3) | 15 bis 20 Gew.-% |

### Beispiel V1.2) (BwE/M1) (ggf. Handelsprodukt):

| | |
|---|---|
| demineralisiertes Wasser (LM/K1) | 82 Gew.-% |
| Bienenwachs (Bw/K3) | 18 Gew.-% |

### Beispiel V2.1) (GaL/M2):

| | |
|---|---|
| demineralisiertes Wasser (LM/K1) | 78 bis 93 Gew.-% |
| Konservierungsmittel (KM/K7) | 5 bis 10 Gew.-% |
| Gummi arabicum (Ga/K2) | 2 bis 12 Gew.-% |

### Beispiel V2.2) (GaL/M2):

| | |
|---|---|
| demineralisiertes Wasser (LM/K1) | 87 Gew.-% |
| Konservierungsmittel (KM/K7) | 9 Gew.-% |
| Gummi arabicum (Ga/K2) | 4 Gew.-% |

### Beispiel V3.1) EML (Handelsprodukte):

| | |
|---|---|
| demineralisiertes Wasser (LM/K1) | 2 bis 10 Gew.-% |
| hydriertes Rizinusöl | 80 bis 96 Gew.-% |
| 1,2-Propylenglykol | 2 bis 10 Gew.-% |

### Beispiel V3.2) EML (Handelsprodukt):

| | |
|---|---|
| demineralisiertes Wasser | 5 Gew.-% |
| hydriertes Rizinusöl | 90 Gew.-% |
| 1,2-Propylenglykol | 5 Gew.-% |

### Beispiel V4.1) (Bw-GaE/M3):

| | |
|---|---|
| Bienenwachsemulsion (M1) | 1 bis 10 Gew.-% |
| Gummi arabicum Lösung (M2) | 2 bis 8 Gew.-% |
| Diethylenglycol (FhM/K5) | 76 bis 96 Gew.-% |
| Emulgator (EM-EML/K6) | 1 bis 6 Gew.-% |

### Beispiel V4.2) (Bw-GaE/M3):

| | |
|---|---|
| Bienenwachsemulsion (z.B.18%-ig) (M1) | 4 Gew.-% |
| Gummi arabicum Lösung (z.B.10%-ig)(M2) | 4 Gew.-% |
| Diethylenglycol (FhM/K5) | 88 Gew.-% |
| Emulgator (EM-EML/K6) | 4 Gew.-% |

### Beispiel V5.1) (Ausgangsmischung/M4):

| | |
|---|---|
| demineralisiertes Wasser (LM/K1) | 94 bis 99,8 Gew.-% |
| Konservierungsmittel (KM/K7) | 0,1 bis 3 Gew.-% |
| Puffermittel (PM/K8) | 0,1 bis 3 Gew.-% |

### Beispiel V5.2) (Ausgangsmischung/M4):

| | |
|---|---|
| demineralisiertes Wasser (LM/K1) | 99,6 Gew.-% |
| Konservierungsmittel (KM/K7) | 0,3 Gew.-% |
| Puffermittel (PM/K8) | 0,1 Gew.-% |

### Beispiel V6.1) (Farblösung/M5):

| | |
|---|---|
| Ausgangsmischung (K1+K7+K8/M4) | 90 bis 99,5 Gew.-% |
| Farbmittel (FM/K4) | 0,5 bis 10 Gew.-% |

### Beispiel V6.2) (Farblösung/M5):

| | |
|---|---|
| Ausgangsmischung (K1+K7+K8/M4) | 94 Gew.-% |
| Farbmittel (FM/K4) | 6 Gew.-% |

### Beispiel V7.0) (fertige Tinte/M6):

Farblösung (M5) + Basismischung (M3)

### Beispiel V8.1) (LM/Bw/Ga-E/M7):

| | |
|---|---|
| demineralisiertes Wasser (LM/K1) | 50 bis 70 Gew.-% |
| Bienenwachs-/Gummi arabicum-E (M3) | 30 bis 50 Gew.-% |

### Beispiel V8.2) (LM/Bw/Ga-E/M7):

| | |
|---|---|
| demineralisiertes Wasser (LM) | 63 Gew.-% |
| Bienenwachs-/Gummi arabicum-E (M3) | 37 Gew.-% |

### Beispiel V9.1) (Rohtinte/M8):

| | |
|---|---|
| LM+M3/(M7) | 90 bis 99,5 Gew.-% |
| Farbstoff(e) (FM/K4) | 0,5 bis 10 Gew.-% |

### Beispiel V9.2) (Rohtinte/M8):

| | |
|---|---|
| LM+M3/(M7) | 94 Gew.-% |
| Farbstoff(e) (FM/K4) | 6 Gew.-% |

### Beispiel V10.1) (fertige Tinte/M9):

| | |
|---|---|
| Rohtinte (M8) | 96 bis 99,8 Gew.-% |
| Konservierungsmittel (KM/K7) | 0,1 bis 3 Gew.-% |
| Puffermittel (PM/K8) | 0,1 bis 3 Gew.-% |

### Beispiel V10.2) (fertige Tinte/M9):

| | |
|---|---|
| Rohtinte (M8) | 56,5 Gew.-% |
| Konservierungsmittel (KM/K7) | 0,3 Gew.-% |
| Puffermittel (PM/K8) | 0,2 Gew.-% |

### m) Rezepturbeispiele:

| **Rahmenbeispiel (R):** | |
|---|---|
| Bienenwachs (Bw) | 0,05 bis 5 Gew.-% |
| Gummi arabicum(Ga) | 0,1 bis 2 Gew.-% |
| Feuchthaltemittel (FhM) | 10 bis 40 Gew.-% |
| Emulgator (EM) | 1 bis 7 Gew.-% |
| Puffermittel (PM) | 0,1 bis 3 Gew.-% |
| Konservierungsmittel (KM) | 0,1 bis 3 Gew.-% |
| Farbstoffe (FM) | 0,1 bis 10 Gew.-% |
| Lösungsmittel (LM) | 34 bis 88,5 Gew.-% |

### Beispiel 1.) (schwarze Tinte)

| | |
|---|---|
| demineralisiertes Wasser (LM) | 59,9 Gew.-% |
| Konservierungsmittel (KM) | 0,2 Gew.-% |
| Triethanolamin (PM) | 0,3 Gew.-% |
| Bienenwachs (Bw) | 0,2 Gew.-% |
| Emulgator (EM) | 1,4 Gew.-% |
| Gummi arabicum (Ga) | 0,1 Gew.-% |
| Diethylenglycol (FhM) | 31,0 Gew.-% |
| Farbstoffe (FM) | 6,9 Gew.-% |

Als Farbstoffe (FM) werden hierfür z.B. verwendet:
1,9 Gew.-% Food blue 2, 3,7 Gew.-% Food red 7
und 1,3 Gew.-% Food yellow 4.
Sofern an die Reinheit der Tinten, insbesondere auch hinsichtlich der Schwermetall-Gehalte, keine ganz so hohen Anforderungen gerichtet werden, können anstelle der obigen Lebensmittelfarbstoffe auch z.B. folgende Säure-Farbstoffe verwendet werden: 1,9 Gew.-% Acid blue 104 (z.B. aus Flüssigfarbstoff), 3 Gew.-% Acid red 18 und 2 Gew.-% Acid yellow 23. Derartig Substitutionen sind auch bei den meisten nachfolgenden Beispielen möglich, wobei dann die erforderlichen bzw. vergleichbaren einzelnen Säure-Farbstoffe auszuwählen und ggf. die Mengenanteile zu ändern sind, um die gewünschte Tintenfarbe zu erhalten.

### Beispiel 2.) (braune Tinte)

| | |
|---|---|
| demineralisiertes Wasser (LM) | 60,1 Gew.-% |
| Konservierungsmittel (KM) | 0,2 Gew.-% |
| Triethanolamin (PM) | 0,3 Gew.-% |
| Bienenwachs(Bw) | 0,2 Gew.-% |
| Emulgator (EM) | 1,4 Gew.-% |
| Gummi arabicum (Ga) | 0,1 Gew.-% |
| Diethylenglycol (FhM) | 31,2 Gew.-% |
| Farbstoffe (FM) | 6,5 Gew.-% |
| FM = 0,8 Gew.-% Food blue 2, 3,5 Gew.-% Food red 7 und 2,2 Gew.-% Food yellow 3. | |

### Beispiel 3.) (violette Tinte)

| | |
|---|---|
| demineralisiertes Wasser (LM) | 62,8 Gew.-% |
| Konservierungsmittel (KM) | 0,2 Gew.-% |
| Triethanolamin (PM) | 0,3 Gew.-% |
| Bienenwachs (Bw) | 0,3 Gew.-% |
| Emulgator (EM) | 1,5 Gew.-% |
| Gummi arabicum (Ga) | 0,1 Gew.-% |
| Diethylenglycol (FhM) | 32,6 Gew.-% |
| Farbstoffe (FM) | 2,2 Gew.-% |
| FM = 0,7 Gew.-% Food blue 2 und 1,5 Gew.-% Food red 14. | |

### Beispiel 4.) (hellgrüne Tinte)

| | |
|---|---|
| demineralisiertes Wasser (LM) | 62,5 Gew.-% |
| Konservierungsmittel (KM) | 0,2 Gew.-% |
| Triethanolamin (PM) | 0,3 Gew.-% |
| Bienenwachs (Bw) | 0,3 Gew.-% |
| Emulgator (EM) | 1,4 Gew.-% |
| Gummi arabicum (Ga) | 0,1 Gew.-% |
| Diethylenglycol (FhM) | 32,4 Gew.-% |
| Farbstoffe (FM) | 2,8 Gew.-% |
| FM = 0,3 Gew.-% Food blue 2 und 2,5 Gew.-% Food yellow 4. | |

### Beispiel 5.) (dunkelgrüne Tinte)

| | |
|---|---|
| demineralisiertes Wasser (LM) | 61,0 Gew.-% |
| Konservierungsmittel (KM) | 0,3 Gew.-% |
| Triethanolamin (PM) | 0,1 Gew.-% |
| Bienenwachs (Bw) | 0,2 Gew.-% |
| Emulgator (EM) | 1,3 Gew.-% |
| Gummi arabicum (Ga) | 0,1 Gew.-% |
| Diethylenglycol (FhM) | 31,6 Gew.-% |
| Farbstoffe (FM) | 5,4 Gew.-% |
| FM = 3,6 Gew.-% Food blue 2 und 1,8 Gew.-% Food yellow 4. | |

### Beispiel 6.) (orange Tinte)

| | |
|---|---|
| demineralisiertes Wasser (LM) | 62,7 Gew.-% |
| Konservierungsmittel (KM) | 0,2 Gew.-% |
| Triethanolamin (PM) | 0,1 Gew.-% |
| Bienenwachs (Bw) | 0,3 Gew.-% |
| Emulgator (EM) | 1,4 Gew.-% |
| Gummi arabicum (Ga) | 0,1 Gew.-% |
| Diethylenglycol (FhM) | 32,4 Gew.-% |
| Farbstoffe (FM) | 2,8 Gew.-% |
| FM = 0,3 Gew.-% Food red 7 und 2,5 Gew.-% Food yellow 4. | |

### Beispiel 7.) (hellblaue Tinte)

| | |
|---|---|
| demineralisiertes Wasser (LM) | 63,7 Gew.-% |
| Konservierungsmittel (KM) | 0,3 Gew.-% |
| Triethanolamin (PM) | 0,3 Gew.-% |
| Bienenwachs (Bw) | 0,3 Gew.-% |
| Emulgator (EM) | 1,4 Gew.-% |
| Gummi arabicum (Ga) | 0,1 Gew.-% |
| Diethylenglycol (FhM) | 33,0 Gew.-% |
| Farbstoffe (FM) | 0,9 Gew.-% |
| FM = 0,7 Gew.-% Food blue 2 und 0,2 Gew.-% Food red 14. | |

### Beispiel 8.) (gelbe Tinte)

| | |
|---|---|
| demineralisiertes Wasser (LM) | 62,8 Gew.-% |
| Konservierungsmittel (KM) | 0,2 Gew.-% |
| Triethanolamin (PM) | 0,1 Gew.-% |
| Bienenwachs (Bw) | 0,2 Gew.-% |
| Emulgator (EM) | 1,4 Gew.-% |
| Gummi arabicum (Ga) | 0,1 Gew.-% |
| Diethylenglycol (FhM) | 32,4 Gew.-% |
| Farbstoffe (FM) | 2,8 Gew.-% |
| FM = 0,1 Gew.-% Food red 7 und 2,7 Gew.-% Food yellow 4. | |

### Beispiel 9.) (pinkfarbene Tinte)

| | |
|---|---|
| demineralisiertes Wasser (LM) | 62,6 Gew.-% |
| Konservierungsmittel (KM) | 0,2 Gew.-% |
| Triethanolamin (PM) | 0,2 Gew.-% |
| Bienenwachs (Bw) | 0,3 Gew.-% |
| Emulgator (EM) | 1,4 Gew.-% |
| Gummi arabicum (Ga) | 0,1 Gew.-% |
| Diethylenglycol (FhM) | 32,4 Gew.-% |
| Farbstoffe (FM) | 2,8 Gew.-% |
| FM = 2,8 Gew.-% Food red 14. | |

### Beispiel 10.) (rote Tinte)

| | |
|---|---|
| demineralisiertes Wasser (LM) | 61,8 Gew.-% |
| Konservierungsmittel (KM) | 0,2 Gew.-% |
| Triethanolamin (PM) | 0,3 Gew.-% |
| Bienenwachs (Bw) | 0,3 Gew.-% |
| Emulgator (EM) | 1,4 Gew.-% |
| Gummi arabicum (Ga) | 0,1 Gew.-% |
| Diethylenglycol (FhM) | 32,1 Gew.-% |
| Farbstoffe (FM) | 3,8 Gew.-% |
| FM = 0,9 Gew.-% Food red 14, 2,7 Gew.-% Food red 7 und 0,9 Gew.-% Food yellow 4. | |

Auch diese Farbstoffe können z.B. durch ca. 4 Gew.-% Acid red 18 ersetzt werden, wenn dies gewünscht wird, wobei dann i.d.R. die Mengendifferenz durch einen veränderten bzw. angepaßten Wasseranteil ausgeglichen wird.

## Patentansprüche

1. Tinte auf wässriger Basis, mit verlängerter "Cap-Off-Time", zum Schreiben, Zeichnen und/oder Malen auf Normalpapier oder sonstigen saugfähigen Schriftträgern, für die Verwendung in Füllfederhaltern, Kugel- oder Röhrchenschreibern, in sogenannten Filz- oder Faserschreibern und/oder in sonstigen Kapillarkanalschreibgeräten, bestehend aus Wasser (W) als überwiegendes oder ausschließliches Lösungsmittel (LM), Bindemittel/Filmbildner (BM), Feuchthaltemittel (FhM), Farbmittel (FM), Emulgatoren (EM) und ggf. weiteren Zusatzstoffen (Z),
**dadurch gekennzeichnet,**
**dass** sie als Bindemittel/Filmbildner (BM) Gummi arabicum (Ga) und Bienenwachs (Bw) enthält.

2. Tinte nach Anspruch 1, **dadurch gekennzeichnet,**
**dass** das Gummi arabikum (Ga) vor der Zugabe in die Tintenmischung als wässrige Lösung (GaL) vorliegt.

3. Tinte nach Anspruch 2, **dadurch gekennzeichnet,**
**dass** das Gummi arabikum (Ga) vor der Zugabe in die Tintenmischung in der Lösung mit einem Anteil von 2 bis 20 Gew.-% vorliegt.

4. Tinte nach einem der vorhergehenden Ansprüche,
**dadurch gekennzeichnet ,**
**daß** das Bienenwachs (Bw) vor der Zugabe in die Tintenmischung als wässrige Emulsion (BwE) vorliegt.

5. Tinte nach Anspruch 4, **dadurch gekennzeichnet ,**
**daß** das Bienenwachs (Bw) vor der Zugabe in die Tintenmischung in der Emulsion mit einem Anteil von 10 bis 30 Gew.-% vorliegt.

6. Tinte nach einem der vorhergehenden Ansprüche,
**dadurch gekennzeichnet ,**
**daß** das Farbmittel (FM) mindestens ein wasserlöslicher Farbstoff (FS) ist.

7. Tinte nach einem der vorhergehenden Ansprüche,
**dadurch gekennzeichnet ,**
**daß** sie 0,1 bis 10 Gew.-% lösliche Farbmittel (FM) bzw. wasserlösliche Farbstoffe (FS) aufweist.

8. Tinte nach einem der vorhergehenden Ansprüche,
**dadurch gekennzeichnet ,**
**daß** das Farbmittel (FM) ein oder mehrere Lebensmittelfarbstoff(e) und/oder ein oder mehrere Säurefarbstoff(e) ist bzw. sind.

9. Tinte nach Anspruch 8, **dadurch gekennzeichnet ,**
**daß** das Farbmittel (FM) im wesentlichen ein Lebensmittelfarbstoff aus der Gruppe: E 110, CI 15985, Food Yellow 3; E 104, CI 47005, Food Yellow 13; E 102, CI 19140, Food Yellow 4; E 124, CI 16255, Food Red 7; E 127, CI 45430, Food Red 14; E 133, CI 42090, Food Blue 2 und/oder E 131, CI 42051, Food Blue 3, ist.

10. Tinte nach Anspruch 8, **dadurch gekennzeichnet ,**
**daß** das Farbmittel (FM) ein Säurefarbstoff aus der Gruppe: Acid Yellow 23, CI 1910; Acid Red 18, CI 16255; Acid Red 51,, CI 45430; Acid Orange 4, CI 16230; Acid Blue 93; Acid Blue 9, CI 42090; Acid Blue 104, CI 42735 und/oder Acid Violett 49, CI 42640 ist.

11. Tinte nach einem der vorhergehenden Ansprüche,
**dadurch gekennzeichnet ,**
**daß** sie 10 bis 40 Gew.-% Feuchthaltemittel (FhM) aufweist.

12. Tinte nach Anspruch 11, **dadurch gekennzeichnet ,**
**daß** das Feuchthaltemittel (FhM) Diethylenglykol, Glycerin, Propylenglycol und/oder Polyglycol ist.

13. Tinte nach Anspruch 12, **dadurch gekennzeichnet ,**
**daß** sie 25-35 Gew.-% Diethylenglycol als Feuchthaltemittel (FhM) aufweist.

14. Tinte nach einem der vorhergehenden Ansprüche,
**dadurch gekennzeichnet ,**
**daß** sie als weitere Zusatzstoffe (Z) Puffermittel (PM) und/oder Konservierungsmittel (KM) enthält.

15. Tinte nach Anspruch 14, **dadurch gekennzeichnet ,**
**daß** sie Triethanolamin als Puffermittel (PM) bzw. als pH-Wert-Regulativ und/oder ein Gemisch aus tert. Butylhydroperoxid und Monophenylglykolether als Konservierungsmittel (KM) enthält.

16. Tinte nach einem der vorhergehenden Ansprüche,
**dadurch gekennzeichnet ,**
**daß** sie als Konservierungsmittel (KM) ein Gemisch aus 10 bis 60 Gew.-% tert. Butylhydroperoxid und 2 bis 50 Gew.-% eines oder mehrerer Monophenylglykolether enthält.

17. Tinte nach einem der vorhergehenden Ansprüche,
**dadurch gekennzeichnet ,**
**daß** sie 0,1 bis 0,6 Gew.-% Triethanolamin als Puffermittel (PM) aufweist.

18. Tinte nach einem der vorhergehenden Ansprüche,
**dadurch gekennzeichnet ,**
**daß** sie einen pH-Wert von 8 aufweist.

19. Tinte nach einem der vorhergehenden Ansprüche,
**dadurch gekennzeichnet,**
**daß** sie 1 bis 7 Gew.-% Emulgator(EM) und/oder 0,1 bis 3 Gew.-% Konservierungsmittel (KM) enthält.

20. Tinte nach einem der vorhergehenden Ansprüche,
**dadurch gekennzeichnet ,**
**daß** sie nichtionische Emulgatoren aus einer oder mehreren der nachfolgend aufgeführten Gruppen aufweist: Alkoholfettsäureester, Ethylenfettsäureester, Polyethylenglycolfettsäureester, Glycerin- bzw. Polyfettsäureester, Sorbitfettsäureester, Pentaerythritfettsäureester, Fettsäureester von Glycerinester, Saccarosefettsäureester, Alkoholpolyglycolether, Fettsäurepolyglycolether, Fettsäureesterpolyglycolether, Fettaminpolyglycolether, Polyglycolether von Fettsäurealkanolamiden, Polyglycolether von Fetten und Ölen, Polypropylenglycolpolyglycolether, Lanolinpolyglycolether, Alkoholpolypropylenglycolether, Fettsäurepolypropylenglycolether, Polypropylenglycolether von Fettaminen, Lonolinpolypropylenglycolether;

21. Tinte nach einem der vorhergehenden Ansprüche,
**dadurch gekennzeichnet ,**
**daß** sie als Emulgator ein Mischung aus 85 bis 95 Gew.-% hydriertem Rizinusöl und 2 bis 8 Gew.-% 1,2-Propylenglykol aufweist.

22. Tinte nach einem der vorhergehenden Ansprüche,
**dadurch gekennzeichnet ,**
**daß** sie als Konservierungsmittel (KM) ein Gemisch aus 12 bis 60 Gew.-% tert. Butylhydroperoxid und 3 bis 50 Gew.-% Monophenylglykolether sowie ggf. einem Verdünnungsmittel enthält.

23. Tinte nach einem der vorhergehenden Ansprüche,
**dadurch gekennzeichnet ,**
**daß** sie frei von Tensiden (T) oder sonstigen Netzmitteln (NM) ist.

24. Tinte nach einem der vorhergehenden Ansprüche,
**dadurch gekennzeichnet ,**
**daß** sie
0,1 bis 2 Gew.-% Gummi arabicum (Ga/K2),
0,05 bis 5 Gew.-% Bienenwachs (Bw/K3),
0,1 bis 10 Gew.-% Farbstoffe (FM/K4),
10 bis 40 Gew.-% Diethylenglycol (FhM/K5),
1 bis 7 Gew.-% Emulgator (EM/K6),
0,1 bis 3 Gew.-% Konservierungsmittel (KM/K7),
0,1 bis 3 Gew.-% Puffermittel (PM/K8) und
als Rest auf 100 Gew.-% Wasser (W) als Lösungsmittel (LM/K1) enthält.

25. Verfahren zur Herstellung einer Tinte nach einem der vorhergehenden Ansprüche **dadurch gekennzeichnet ,**
**daß** vorab eine Bienenwachsemulsion (BwE) als erste Mischung (M1) aus Bienenwachs (Bw/K3), ggf. Emulgator (EM/K6) und Wasser (LM/K1) hergestellt wird.

26. Verfahren zur Herstellung einer Tinte nach einem der vorhergehenden Ansprüche **dadurch gekennzeichnet,**
**daß** eine Gummi arabicum-Lösung (GaL) als Mischung (M2) aus Gummi arabicum (Ga/K2), Konservierungsmittel (KM/K7) und Wasser (LM/K1) hergestellt wird.

27. Verfahren zur Herstellung einer Tinte nach einem der vorhergehenden Ansprüche **dadurch gekennzeichnet ,**
**daß** eine Basismischung (M3) aus Gummi arabicum-Lösung (GaL/M2), Bienenwachsemulsion (BwE/M1), weiterem Emulgator (EM/K6) und Feuchthaltemittel (FhM/K5) hergestellt wird.

28. Verfahren nach einem der vorhergehenden Ansprüche,
**dadurch gekennzeichnet ,**
**daß** die Tinte als O/W-Emulsion hergestellt wird, wobei aus den Komponenten (K1, K..., K8) die nachfolgenden Mischungen (M1, M..., M6) schrittweise gebildet werden:
(M1) Bienenwachsemulsion (z.B. BwE aus K1, K3, K6);
(M2) Gummi arabicum Lsg.(z.B. GaL aus K1, K2, K7);
(M3) eine Basismischung (M3), aus M1 und M2 + K5 und K6;
(M4) eine Ausgangsmischung (M4) aus K1, K7 und K8;
(M5) eine Farblösung (M5) aus M4 + K4 und
(M6) die Tinte aus M5 und M3,
wobei die Basismischung (M3) unter Rühren in die Farblösung (M5) eingearbeitet wird.

## Claims

1. Ink on an aqueous base with extended 'cap-off time' for writing, drawing and/or painting on normal paper or other absorbent writing substrates, for use in fountain pens, ballpoint pens or tubelet pens, in so-termed felt or fibre markers and/or in other capillary duct writing instruments, consisting of water (W) as predominant or exclusive solvent (LM), binder/film-former (BM), moisturiser (FLM), colorant (FM), emulsifiers (EM) and optionally further additives (Z), **characterised in that** it contains gum arabic (Ga) and beeswax (Bw) as binder/film-former (Bw).

2. Ink according to claim 1, **characterised in that** the gum arabic (Ga) is present as aqueous solution (GaL) before addition to the ink mixture.

3. Ink according to claim 2, **characterised in that** the gum arabic (Ga) is present in solution with a component of 2 to 20 weight % before addition to the ink mixture.

4. Ink according to one of the preceding claims, **characterised in that** the beeswax (Ga) is present as an aqueous emulsion (BwE) before addition to the ink mixture.

5. Ink according to claim 4, **characterised in that** the beeswax (Bw) is present in the emulsion in a proportion of 10 to 30 weight percent before addition to the ink mixture.

6. Ink according to one of the preceding claims, **characterised in that** the colorant (FM) is at least one water-soluble dye (FS).

7. Ink according to one of the preceding claims, **characterised in that** it comprises 0.1 to 10 weight % of soluble colorant (FM) or water-soluble dye (FS).

8. Ink according to one of the preceding claims, **characterised in that** the colorant (FM) is or are a or several foodstuff colouring or colourings and/or a or several acid dye or dyes.

9. Ink according to claim 8, **characterised in that** the colorant (FM) is substantially a foodstuff colouring from the group E 100, CI 15985, Food Yellow 3; E 104, CI 47005, Food Yellow 13; E 102, CI 19140, Food Yellow 4; E 124, CI 16255, Food Red 7; E 127, Cl 45430, Food Red 14; E 133, Cl 42090, Food Blue 2 and/or E 131, CI 42051, Food Blue 3.

10. Ink according to claim 8, **characterised in that** the colorant (FM) is an acid dye from the group Acid Yellow 23, CI 1910; Acid Red 18, Cl 16255; Acid Red 51, CI 45430; Acid Orange 4, CI 16230; Acid Blue 93; Acid Blue 9, CI 42090; Acid Blue 104, Cl 42735 and/or Acid Violet 49, CI 42640.

11. Ink according to one of the preceding claims, **characterised in that** it comprises 10 to 40 weight % of moisturiser (FLM).

12. Ink according to claim 11, **characterised in that** the moisturiser (FLM) is diethyleneglycol, glycerol, propyleneglycol and/or polyglycol.

13. Ink according to claim 12, **characterised in that** it comprises 25 to 35 weight % of diethyleneglycol as moisturiser (FLM).

14. Ink according to one of the preceding claims, **characterised in that** it contains a buffer (PM) and/or preservative as further additives (Z).

15. Ink according to claim 14, **characterised in that** it contains triethanolamine as buffer (PM) or a pH value regulator and/or a mixture of tertiary butylhydroperoxide and monophenylglycol ether as preservative (KM).

16. Ink according to one of the preceding claims, **characterised in that** it contains as preservative (KM) a mixture of 10 to 60 weight % of tertiary butylhydroperoxide and 2 to 50 weight % of one or more monophenylglycol ethers.

17. Ink according to one of the preceding claims, **characterised in that** it comprises 0.1 to 6.0 weight % of triethanolamine as buffer (PM).

18. Ink according to one of the preceding claims, **characterised in that** it has a pH value of 8.

19. Ink according to one of the preceding claims, **characterised in that** it contains 1 to 7 weight % of emulsifier (EM) and/or 0.1 to 3 weight % of preservative (KM).

20. Ink according to one of the preceding claims, **characterised in that** it comprises non-ionic emulsifiers from one or more of the groups stated in the following:
alcohol fatty acid ester, ethylene fatty acid ester, polyethyleneglycol fatty acid ester, glycerol fatty acid ester, poly fatty acid ester, sorbitol fatty acid ester, pentaerythritol fatty acid ester, fatty acid ester of glycerol ester, saccarose fatty acid ester, alcohol polyglycol ether, fatty acid polyglycol ether, fatty acid ester polyglycol ether, fatty amine polyglycol ether, polyglycol ether of fatty acid alkanol amides, polyglycol ether of fats and oils, polypropyleneglycol polyglycol ether, lanolin polyglycol ether, alcohol polypropyleneglycol ether, fatty acid polypropyleneglycol ether, polypropyleneglycol ether of fatty amines, lanolin polypropyleneglycol ether.

21. Ink according to one of the preceding claims, **characterised in that** it comprises as emulsifier a mixture of 85 to 95 weight % of hydrated castor oil and 2 to 8 weight % of 1, 2-propyleneglycol.

22. Ink according to one of the preceding claims, **characterised in that** it contains as preservative (KM) a mixture of 12 to 60 weight % of tertiary butylhydroperoxide and 3 to 50 weight % of monophenylglycol ether as well as optionally a diluent.

23. Ink according to one of the preceding claims, **characterised in that** it is free of surfactants (T) or other wetting agents (NM).

24. Ink according to one of the preceding claims, **characterised in that** it contains
0.1 to 2 weight % of gum arabic (Ga/K2),
0.05 to 5 weight % of beeswax (Bw/K3),
0.1 to 10 weight % of colorant (FM/K4),
10 to 40 weight % of diethyleneglycol (FhM/K5),
1 to 7 weight % of emulsifier (EM/K6)
0.1 to 3 weight % of preservative (KM/K7)
0.1 to 3 weight % of buffer (PM/K8) and,
as remainder, 100 weight % of water (W) as solvent (LM/K1).

25. Method of producing an ink according to one of the preceding claims, **characterised in that** initially a beeswax emulsion (BwE) is produced as a first mixture (M1) of beeswax (Bw/K3), optionally emulsifier (EM/K6) and water (LM/K1).

26. Method of producing an ink according to one of the preceding claims, **characterised in that** a gum arabic solution (GaL) is produced as a mixture (M2) of gum arabic (Ga/K2), preservative (KM/K7) and water (LM/K1).

27. Method of producing an ink according to one of the preceding claims, **characterised in that** a basic mixture (M3) of gum arabic solution (GaL/M2), beeswax emulsion (BwE/M1), further emulsifier (EM/K6) and a moisturiser (FhM/K5) is produced.

28. Method according to one of the preceding claims, **characterised in that** the ink is produced as an O/W emulsion, wherein the following mixtures (M1, M ..., M6) are formed in steps from the components (K1, K ..., K8):
(M1) beeswax emulsion (for example, BwE of K1, K3, K6);
(M2) gum arabic solution (for example, GaL of K1, K2, K7);
(M3) a basic mixture (M3), of M1 and M2 + K5 and K6;
(M4) a starting mixture (M4) of K1, K7 and K8;
(M5) a colouring solution (M5) of M4 + K4 and
(M6) the ink of M5 and M3,
wherein the basic mixture (M3) is processed, under stirring, into the colouring solution (M5).

## Revendications

1. Encre à base d'eau, présentant une durée sans capuchon (durée de cap-off) prolongée, destinée à écrire, à dessiner et/ou à peindre sur du papier normal ou d'autres supports d'écriture absorbants, destinée à une utilisation dans des stylos à encre à plume, des crayons à bille ou à tube capillaire calibrés, dans des crayons dits feutres ou à fibres, et/ou dans d'autres dispositifs d'écriture de type à tube capillaire, composée d'eau (W) en tant que solvant (LM) prépondérant ou exclusif, d'un liant/agent filmogène (BM), d'un humidificateur (FhM), d'un colorant (FM), d'émulsifiants (EM) et éventuellement d'autres additifs (Z),
**caractérisée en ce qu'**elle contient en tant que liant/agent filmogène (BM) de la gomme arabique (Ga) et de la cire d'abeille (Bw).

2. Encre selon la revendication 1, **caractérisée en ce que** la gomme arabique (Ga) se présente, avant ajout dans le mélange d'encre, sous la forme d'une solution aqueuse (GaL).

3. Encre selon la revendication 2, **caractérisée en ce que** la gomme arabique (Ga) se présente dans la solution, avant ajout dans le mélange d'encre, dans une proportion comprise entre 2 et 20 % en masse.

4. Encre selon l'une des revendications précédentes, **caractérisée en ce que** la cire d'abeille (Bw) se présente, avant ajout dans le mélange d'encre, sous la forme d'une émulsion aqueuse (BwE).

5. Encre selon la revendication 4, **caractérisée en ce que** la cire d'abeille se présente dans l'émulsion, avant ajout dans le mélange d'encre, dans une proportion comprise entre 10 et 30 % en masse.

6. Encre selon l'une des revendications précédentes, **caractérisée en ce que** le colorant (FM) est au moins un colorant hydrosoluble (FS).

7. Encre selon l'une des revendications précédentes, **caractérisée en ce qu'**elle contient 0,1 à 10 % en masse de colorants solubles (FM) ou de colorants hydrosolubles (FS).

8. Encre selon l'une des revendications précédentes, **caractérisée en ce que** le ou les colorants (FM) sont un ou plusieurs colorants alimentaires et/ou un ou plusieurs colorants acides.

9. Encre selon la revendication 8, **caractérisée en ce que** le colorant (FM) est essentiellement un colorant alimentaire du groupe : E 110, CI 15985, jaune alimentaire 3 ; E 104, CI 47005, jaune alimentaire 13 ; E 102, CI 19140, jaune alimentaire 4 ; E 124, CI 16255, rouge alimentaire 7 ; E 127, CI 45430, rouge alimentaire 14 ; E 133, CI 42090, bleu alimentaire 2 et/ou E 131, CI 42051, bleu alimentaire 3.

10. Encre selon la revendication 8, **caractérisée en ce que** le colorant (FM) est un colorant acide du groupe ; jaune acide 23, CI 1910 ; rouge acide 18, CI 16255 13 ; rouge acide 51, CI 45430 , orange acide 4, CI 16230, bleu acide 93 ; bleu acide 9, CI 42090 ; bleu acide 104, CI 42735 et/ou violet acide 49, CI 42640.

11. Encre selon l'une des revendications précédentes, **caractérisée en ce qu'**elle présente 10 à 40 % en masse d'un humidificateur (FhM).

12. Encre selon la revendication 11, **caractérisée en ce que** l'humidificateur (FhM) est du diéthylèneglycol, de la glycérine, du propylèneglycol et/ou du polyglycol.

13. Encre selon la revendication 12, **caractérisée en ce qu'**elle présente 25 à 35 % en masse de diéthylèneglycol en tant qu'humidificateur (FhM).

14. Encre selon l'une des revendications précédentes, **caractérisée en ce qu'**elle contient en tant qu'autres additifs (Z) un agent tampon (PM) et/ou un conservateur (KM).

15. Encre selon la revendication 14, **caractérisée en ce qu'**elle contient de la triéthanolamine en tant qu'agent tampon (PM) ou en tant que régulateur de pH, et/ou un mélange composé d'hydroperoxyde de tert.-butyle et de glycoléther de monophényle en tant que conservateur (KM).

16. Encre selon l'une des revendications précédentes, **caractérisée en ce qu'**elle contient en tant que conservateur (KM) un mélange de 10 à 60 % en masse d'hydroperoxyde de tert.-butyle et 2 à 50 % en masse d'un ou de plusieurs glycoléthers de monophényle.

17. Encre selon l'une des revendications précédentes, **caractérisée en ce qu'**elle contient 0,1 à 0,6 % en masse de triéthanolamine en tant qu'agent tampon (PM).

18. Encre selon l'une des revendications précédentes, **caractérisée en ce qu'**elle présente une valeur de pH de 8.

19. Encre selon l'une des revendications précédentes, **caractérisée en ce qu'**elle contient 1 à 7 % en masse d'émulsifiant (EM) et/ou 0,1 à 3 % en masse de conservateur (KM).

20. Encre selon l'une des revendications précédentes, **caractérisée en ce qu'**elle contient des émulsifiants non ioniques issus d'un ou de plusieurs parmi les groupes suivants : esters d'acides gras et d'alcools, esters d'acides gras et d'éthylène, esters d'acides gras et de polyéthylèneglycol, esters de glycérine ou de polyacides gras, esters d'acides gras de sorbitol, esters d'acides gras et de pentaérythritol, esters d'acides gras d'esters de glycérine, esters d'acides gras et de saccharose, polyglycoléthers d'alcools, polyglycoléthers d'acides gras, polyglycoléthers d'esters d'acides gras, polyglycoléthers d'amines grasses, polyéthers d'alcanolamides et d'acides gras, polyglycoléthers de graisses et d'huiles, polyglycoléthers de polypropylèneglycol, polyglycoléthers de lanoline, polypropylèneglycoléthers d'alcools, polypropylèneglycoléthers d'acides gras, polypropylèneglycoléthers d'amines grasses, polypropylèneglycoléthers de lanoline.

21. Encre selon l'une des revendications précédentes, **caractérisée en ce qu'**elle contient en tant qu'émulsifiant un mélange composé de 85 à 95 % en masse d'huile de ricin hydrogénée et de 2 à 8 % en masse de 1,2-propylèneglycol.

22. Encre selon l'une des revendications précédentes, **caractérisée en ce qu'**elle contient en tant que conservateur (KM) un mélange composé de 12 à 60 % en masse d'hydroperoxyde de tert.-butyle et de 3 à 50 % en masse de glycoléther de monophényle, ainsi qu'éventuellement d'un agent diluant.

23. Encre selon l'une des revendications précédentes, **caractérisée en ce qu'**elle est exempte de tensioactifs (T) ou d'autres agents mouillants (NM).

24. Encre selon l'une des revendications précédentes, **caractérisée en ce qu'**elle contient
0,1 à 2 % en masse de gomme arabique (Ga/K2),
0,05 à 5 % en masse de cire d'abeille (Bw/K3),
0,1 à 10 % en masse de colorants (FM/K4),
10 à 40 % en masse de diéthylèneglycol (FhM/K5),
1 à 7 % en masse d'émulsifiant (EM/K6),
0,1 à 3 % en masse de conservateurs (KM/K7),
0,1 à 3 % en masse d'agent tampon (PM/K8), et
le reste à 100 % en masse d'eau (W) en tant que solvant (LM/K1).

25. Procédé de fabrication d'une encre selon l'une des revendications précédentes, **caractérisé en ce qu'**une émulsion de cire d'abeille (BwE) est fabriquée d'abord en tant que premier mélange (M1) de cire d'abeille (Bw/K3), éventuellement d'émulsifiant (EM/K6) et d'eau (LM/K1).

26. Procédé de fabrication d'une encre selon l'une des revendications précédentes, **caractérisé en ce qu'**une solution de gomme arabique (GaL) est fabriquée en tant que mélange (M2) de gomme arabique (Ga/K2), de conservateur (KM/K7) et d'eau (LM/K1).

27. Procédé de fabrication d'une encre selon l'une quelconque des revendications précédentes, **caractérisé en ce qu'**un mélange de base (M3) est constitué de solution de gomme arabique (GaL/M2), d'émulsion de cire d'abeille (BwE/M1), d'un autre émulsifiant (EM/K6) et d'un humidificateur (FhM/K5) est fabriqué.

28. Procédé selon l'une des revendications précédentes, **caractérisé en ce que** l'encre est fabriquée en tant qu'émulsion huile-dans-eau, les mélanges suivants (M1...M6) étant formés par étapes à partir des composants (K1, K... K8):
(M1) Émulsion de cire d'abeille (par exemple BwE à partir de K1, K3, K6) ;
(M2) Solution de gomme arabique (par exemple GaL à partir de K1, K2, K7) ;
(M3) Mélange de base (M3) à partir de M1 et M2 + K5 et K6 ;
(M4) Mélange initial (M4) à partir de K1, K7 et K8 ;
(M5) Solution de colorants (M5) à partir de M4 + K4, et
(M6) Encre à partir de M5 et M3,
le mélange de base (M3) étant incorporé dans la solution de colorants (M5) sous agitation.
